# NOUVEAU FASCICULE DE BREVET EUROPEEN

(11) **EP 0 857 598 B2**
(45) Date de publication et mention de la décision concernant l'opposition: **04.04.2012**
(45) Mention de la délivrance du brevet: 12.09.2001
(21) Numéro de dépôt: 98400191.7
(22) Date de dépôt: 29.01.1998
(51) Int. Cl.: B60J 7/20

(54) **Malle arrière pour véhicule découvrable**
Hinterkofferraum für Cabrio-Fahrzeug
Rear luggage compartment for convertible vehicle

(30) Priorité: 05.02.1997 FR 9701305
(43) Date de publication de la demande: 12.08.1998
(73) Titulaire: Société Européenne de Brevets Automobiles, 75011 Paris 11 (FR)
(72) Inventeur: Guillez, Jean Marc, 79140 Cirieres (FR)
(74) Mandataire: Pichat, Thierry

(56) Documents cités:
- DE-C- 4 445 944
- GB-A- 2 300 671
- JP-Y- 453 292

## Description

La présente invention concerne un capot arrière pour véhicule découvrable à toit repliable, comprenant des moyens permettant une ouverture de ce capot de l'arrière vers l'avant pour l'accès au coffre arrière et une ouverture de l'avant vers l'arrière pour le passage et le rangement du toit replié dans ledit coffre.

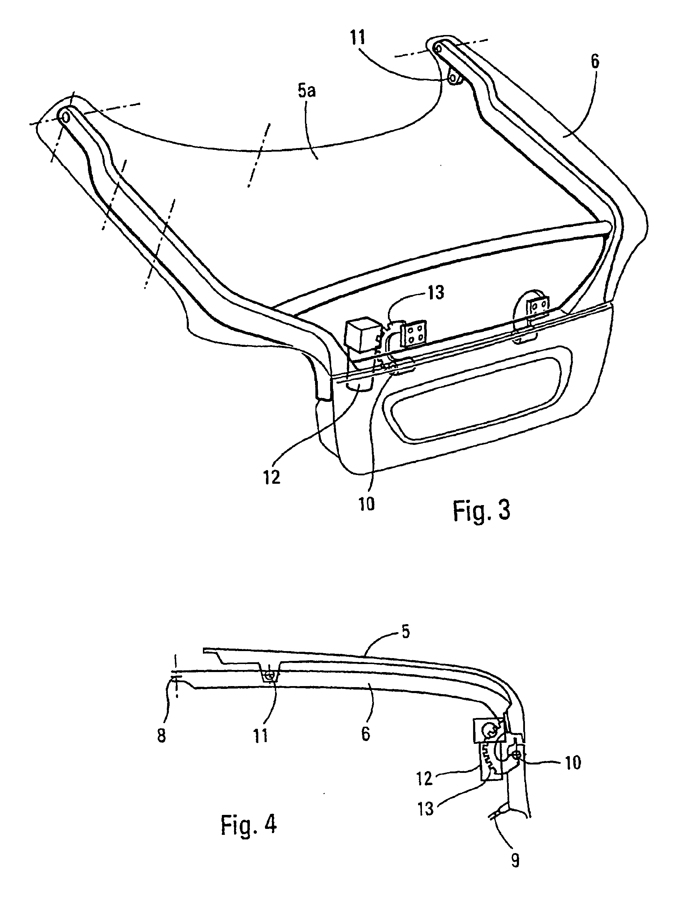

Le document GB 2300671 A divulgue (voir les figures 3 et 4) un capot arrière similaire pour un véhicule découvrable à toit repliable comprenant des moyens permettant une ouverture de ce capot de l'arrière vers l'avant (voir la figure 4) pour l'accès au coffre arrière et une ouverture de l'avant vers l'arrière (voir la figure 3) pour le passage et le rangement du toit replié dans ledit coffre. Le capot est constitué par deux éléments solidaires l'un de l'autre dans le cas de l'ouverture du capot de l'avant vers l'arrière, l'un de ces deux éléments étant dissociable par rapport à l'autre élément pour permettre son déplacement par basculement de l'arrière vers l'avant. L'ensemble formé par les deux éléments est solidaire du châssis du véhicule, d'une part, par l'intermédiaire d'une articulation située à l'arrière du capot, permettant la rotation de cet ensemble de l'avant vers l'arrière, et, d'autre, part, par une serrure située à l'avant du capot permettant son verrouillage sur ce même châssis.

Pour l'accès au coffre l'un de ces deux éléments est dissociable par rapport à l'autre élément pour permettre son déplacement par basculement de l'arrière vers l'avant. Parce que l'autre élément est encore en place, l'ouverture d'accès au coffre est limitée.

Le but de la présente invention est d'améliorer ce capot et de créer à l'aide de moyens simples et de mise en oeuvre commode pour les utilisateurs, un capot ayant les deux possibilités d'ouvertures ci-dessus.

Ce but est atteint par un capot selon la revendication 1.

Ainsi, lors de l'ouverture normale du coffre de l'arrière vers l'avant, les deux éléments forment un ensemble qui s'ouvre, comme un capot d'une seule pièce, tandis que dans l'autre cas, lorsque l'on veut ranger dans le coffre le toit rigide à l'état replié, l'un des deux éléments peut être déverrouillé par rapport à l'autre élément, puis basculé de l'avant vers l'arrière pour dégager un passage pour le toit rigide.

D'autres particularités et avantages de l'invention apparaîtront encore dans la description ci-après.

Aux dessins annexés donnés à titre d'exemples non limitatifs:
- la figure 1 est une vue schématique en coupe longitudinale d'un véhicule comportant un capot arrière selon l'invention;
- la figure 2 est une vue schématique en coupe longitudinale du capot arrière selon l'invention;
- la figure 3 est une vue en perspective du capot arrière selon l'invention;
- la figure 4 est une vue en coupe longitudinale du capot arrière représenté sur la figure 3;
- la figure 5 est une vue en coupe selon le plan A, de la figure 2;
- la figure 6 est une vue schématique en coupe suivant le plan C de la figure 2, montrant l'articulation de l'un des éléments du capot par rapport au châssis du véhicule;
- la figure 7 est une vue en coupe suivant le plan B montrant le verrouillage entre les deux éléments du capot;
- la figure 8 est une vue en plan d'une variante de la commande du pivotement de l'un des éléments du capot;
- les figures 9, 10 et 11 montrent des variantes de réalisation du capot arrière selon l'invention.

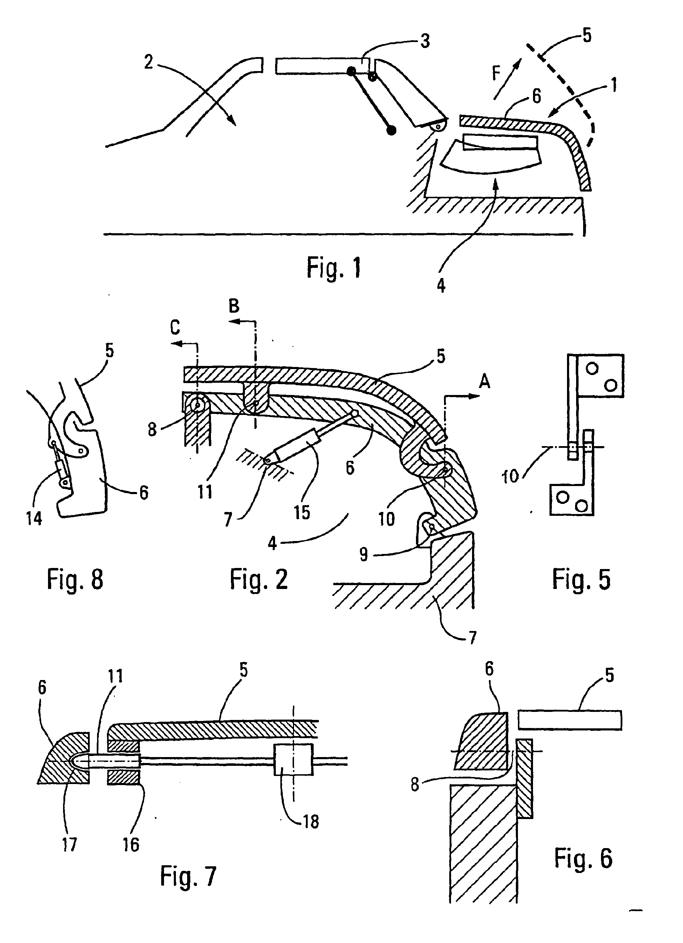

Dans la réalisation des figures 1 et 2, le capot arrière 1 du véhicule découvrable 2 à toit rigide repliable 3, comprend des moyens permettant une ouverture de ce capot 1 de l'arrière vers l'avant pour l'accès au coffre arrière 4 et une ouverture de l'avant vers l'arrière pour le passage et le rangement du toit 3 replié dans ce coffre.

Conformément à l'invention, le capot 1 est constituée par deux éléments 5, 6 solidaires l'un de l'autre dans le cas de l'ouverture du capot 1 de l'arrière vers l'avant. L'un 5 de ces deux éléments est dissociable par rapport à l'autre élément 6 pour permettre son déplacement par basculement de l'avant vers l'arrière (voir flèche F de la figure 1).

L'ensemble formé par les deux éléments 5, 6 est solidaire du châssis 7 du véhicule d'une part, par l'intermédiaire d'une articulation 8 située à l'avant du capot 1, permettant la rotation de cet ensemble de l'arrière vers l'avant, et, d'autre part, par une serrure 9 située à l'arrière du capot 1 permettant son verrouillage sur ce même châssis 7.

La figure 6 montre le détail de l'articulation 8.

On voit sur la figure 2 que l'élément 5 est articulé sur le second élément 6 suivant un axe 10 situé près de l'arrière de ce second élément et est verrouillé à ce second élément 6 par un verrou coulissant 11 situé près de l'avant des deux éléments 5, 6.

On voit sur la figure 3 que le premier élément 5 recouvre un évidement 5a pratiqué dans le deuxième élément 6.

Le pivotement de l'élément 5 suivant l'axe 10 situé près de l'arrière de l'autre élément 6 peut être commandé (voir figure 4) par un moteur 12 entraînant un secteur denté 13 solidaire du premier élément 5.

Le pivotement de l'élément 5 peut également être commandé par un vérin 14 (voir figure 8), ou simplement équilibré pour une manipulation manuelle de l'élément 5 auquel cas le moteur 18 sera également remplacé par un verrouillage manuel.

L'ensemble formé par les deux éléments 5, 6 verrouillés ensemble par le verrou 11 peut être équilibré lors de son ouverture de l'arrière vers l'avant par un vérin 15 (voir figure 2) fixé, d'une part, au châssis 7 et, d'autre part, à l'élément 6.

Comme indiqué sur la figure 7, les deux éléments 5, 6 sont verrouillés ensemble par un doigt 11 monté coulissant dans un palier 16 solidaire du premier élément 5 et engagé dans un trou 17 pratiqué dans le second élément 6. Ce doigt 11 peut être commandé par un moteur 18 ou un organe manuel.

On va maintenant expliquer le fonctionnement du capot arrière que l'on vient de décrire.

Pour avoir accès au coffre 4 du véhicule, on déverrouille la serrure 9 et on soulève du capot constitué par les deux éléments 5, 6 verrouillés ensemble par le verrou 11.

On fait ainsi pivoter le capot de l'arrière vers l'avant. Ce mouvement est assisté par le vérin 15.

Lorsqu'on veut ranger le toit 3 dans le coffre, on déverrouille le verrou 11 en actionnant le moteur 18 ou tout autre organe de commande manuelle.

On actionne ensuite le moteur 12 pour faire pivoter l'élément 5 de l'avant vers l'arrière pour dégager l'évidement ménagé dans l'élément 6.

Le toit 3 est ensuite déplacé automatiquement ou par tout moyen approprié vers le coffre 4, pour y être rangé à l'état replié.

Bien entendu , l'invention n'est pas limitée aux exemples que l'on vient de décrire et on peut y apporter de nombreuses modifications sans sortir du cadre de l'invention.

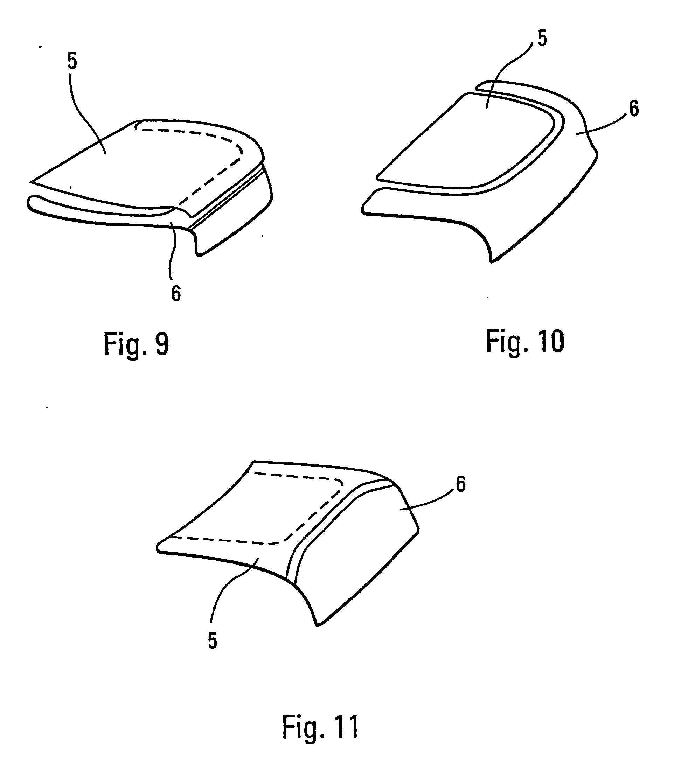

Ainsi, les deux éléments 5 et 6 du capot arrière conforme à l'invention peuvent présenter les configurations représentées sur les figures 9, 10 et 11.

## Revendications

1. Capot (1) pour fermer et ouvrir le coffre arrière (4) d'un véhicule découvrable à toit rigide repliable (3) comprenant des moyens pour permettre une ouverture du capot (1) de l'arrière vers l'avant pour l'accès au coffre arrière (4) et une ouverture du capot (1) de l'avant vers l'arrière pour le passage et le rangement du toit (3) replié dans ledit coffre (4), le capot (1) étant constitué par deux éléments (5, 6) de capot, le premier (5) de ces deux éléments de capot (5, 6) étant adapté à recouvrir un évidement (5a) pratiqué dans le second élément de capot (6) et étant dissociable par rapport audit second élément de capot (6) qui reste dans sa position fermée de telle sorte que ledit premier élément de capot (5) est adapté à se déplacer seul par basculement, et l'ensemble formé par les deux éléments de capot (5, 6) étant solidaire du châssis (7) du véhicule, d'une part, par l'intermédiaire d'une articulation (8) et, d'autre part, par une serrure (9), **caractérisé en ce que** :
- ladite articulation (8), qui est située à l'avant du capot (1), permet la rotation de l'arrière vers l'avant de l'ensemble formé par les deux éléments de capot (5, 6),
- ladite serrure (9), qui est située à l'arrière du capot (1), entre le châssis (7) et le capot (6), permet le verrouillage de cet ensemble sur ledit châssis (7),
- lesdits deux éléments (5, 6) de capot sont solidaires l'un de l'autre dans le cas de l'ouverture du capot (1) de l'arrière vers l'avant comme un capot d'une seule pièce,
- et le premier (5) des deux éléments de capot (5, 6) est adapté :
* alors que le second élément de capot (6) reste dans sa position fermée, à se déplacer seul par basculement de l'avant vers l'arrière pour dégager ledit évidement (5a)
* et à permettre le passage du toit rigide (3) replié à travers ledit évidement (5a) et le rangement du toit (3) replié dans ledit coffre (4).

2. Capot de coffre arrière conforme à la revendication 1, **caractérisé en ce que** le premier élément de capot (5) est articulé sur le second élément de capot (6) suivant un axe (10) situé près de l'arrière du second élément de capot (6), et est verrouillé au second élément de capot (6) par un verrou (11) coulissant, situé près de l'avant des deux éléments de capot (5, 6).

3. Capot de coffre arrière conforme à la revendication 2, **caractérisé en ce que** le pivotement du premier élément de capot (5) suivant ledit axe (10) situé près de l'arrière du second élément de capot (6) est commandé par un moteur (12) entraînant un secteur denté (13) solidaire du premier élément de capot (5) ci-dessus.

4. Capot de coffre arrière conforme à la revendication 3, **caractérisé en ce que** le moteur (12) est monté sur le second élément de capot (6).

5. Capot de coffre arrière conforme à la revendication 2, **caractérisé en ce que** le pivotement du premier élément de capot (5) suivant ledit axe (10) situé près de l'arrière du second élément de capot (6) peut être commandé par un vérin (14) ou équilibré pour une manipulation manuelle du premier élément de capot (5).

6. Capot de coffre arrière conforme à la revendication 5, **caractérisé en ce que** le vérin (14) est monté sur le second élément de capot (6).

7. Capot de coffre arrière conforme à l'une des revendications 1 à 6, **caractérisé en ce que** l'ensemble formé par les deux éléments de capot (5, 6) verrouillés ensemble, est équilibré lors de son ouverture de
l'arrière vers l'avant par un vérin (15) fixé, d'une part, au châssis (7) et, d'autre part, audit second élément de capot (6).

8. Capot de coffre arrière conforme à l'une des revendications 1 à 7, **caractérisé en ce que** les deux éléments de capot (5, 6) sont verrouillés ensemble par un doigt (11) monté coulissant dans un palier (16) solidaire du premier élément de capot (5) et engagé dans un trou (17) pratiqué dans le second élément de capot (6), ce doigt (11) étant commandé par un moteur (18) ou un organe manuel.

## Claims

1. A boot lid (1) for closing and opening the rear boot (4) of a convertible vehicle having a rigid folding roof (3) including means allowing the boot lid (1) to be opened from the rear towards the front for accessing to the rear boot (4) whilst also allowing the boot lid (1) to be opened from the front towards the rear for the folded roof (3) to move into said boot (4) and be stowed therein, said boot lid (1) being made up of two lid members (5, 6), the first (5) of these two lid members (5, 6) being designed to cover an opening (5a) formed in the second lid member (6), and being separable from said second lid member (6) which remains in its closed position so that said first lid member (5) is adapted to swing up on its own, and the assembly formed by the two lid members (5, 6) being firmly attached to the vehicle chassis (7), on the one hand, by way of an articulation (8) and, on the other hand, by a lock (9), **characterized in that**:
- said articulation (8), which is located at the front of the boot lid (1), allows the assembly formed by the two lid members (5, 6) to rotate from the rear towards the front,
- said lock (9), which is located at the rear of the boot lid (1), between the chassis (7) and the lid (6), allows said assembly to be locked to said chassis (7),
- said two lid members (5, 6) are firmly attached to one another when the boot lid (1) is opened from the rear towards the front in the manner of a one-piece boot lid,
- and the first (5) of the two lid members (5, 6) is designed:
* to move on it own, swinging up from the front towards the rear for clearing the way to said opening (5a) whilst the second lid member (6) remains in its closed position,
* and to allow the rigid folded roof to move through said opening (5a) and be stowed in said boot (4).

2. The rear boot lid according to Claim 1, **characterized in that** the first lid member (5) is articulated with the second lid member (6) about an axis (10) near the rear of the second lid member (6), and is secured to the second lid member (6) by a sliding bolt (11), disposed near the front of the two lid members (5, 6).

3. The rear boot lid according to Claim 2, **characterized in that** the pivoting of the first lid member (5) about said axis (10) near the rear of the second lid member (6) is controlled by a motor (12) driving a toothed sector (13) which is firmly attached to said first lid member (5).

4. The rear boot lid according to Claim 3, **characterized in that** the motor (12) is mounted on the second lid member (6).

5. The rear boot lid according to Claim 2, **characterized in that** the pivoting of the first lid member (5) about said axis (10) near the rear of the second lid member (6) can be controlled by a jack (14) or balanced for manual operation of the first lid member (5).

6. The rear boot lid according to Claim 5, **characterized in that** the jack (14) is mounted on the second lid member (6).

7. The rear boot lid according to one of Claims 1 to 6, **characterized in that** the assembly made up of the two lid members (5, 6) bolted together, is balanced when opened from the rear towards the front by a jack (15) fixed, on the one hand, to the chassis (7) and, on the other hand, to said second lid member (6).

8. The rear boot lid according to one of Claims 1 to 7, **characterized in that** the two lid members (5, 6) are bolted together by a pin (11) mounted so as to slide in a bearing (16), which is firmly attached to the first lid member (5), and engage in a hole (17) made in the second lid member (6), this pin (11) being operated by a motor (18) or by a manual component.

## Patentansprüche

1. Haube (1) zum Schließen und Öffnen des Heckkofferraums (4) eines Cabrio-Fahrzeuges mit zusammenfaltbarem, festem Dach (3) mit Vorrichtungen welche ein Öffnen der Haube (1) von hinten nach vorne für den Zugang zum Heckkofferraum (4) und ein Öffnen von vorne nach hinten für den Durchlass und die Anordnung des gefalteten Dachs in besagtem Kofferraum (4) ermöglichen, wobei die Haube (1) aus zwei Haubenelementen (5, 6) besteht, wobei das erste (5) dieser beiden Haubenelemente (5, 6) dafür eingerichtet ist, eine in dem zweiten Haubenelement (6) angeordnete Aussparung (5a) abzudecken, und es bezüglich besagten zweiten Haubenelementes (6) abtrennbar ist, welches in seiner Schließstellung verbleibt, sodass das besagte erste Haubenelement (5) dafür eingerichtet ist, sich nur durch Schwenken zu verschieben, und wobei die von den beiden Haubenelementen (5, 6) gebildete Anordnung einerseits mittels eines Gelenks (8) und andererseits mittels einer Verschlussvorrichtung (9) einstückig mit dem Chassis (7) des Fahrzeugs ausgebildet ist, **dadurch gekennzeichnet, dass**:
- besagtes Gelenk (8), welches vorne an der Haube (1) angeordnet ist, die Drehung der von den beiden Haubenelementen (5, 6) gebildeten Anordnung von hinten nach vorne ermöglicht,
- besagte Verschlussvorrichtung (9), welche hinten an der Haube (1) zwischen dem Chassis (7) und der Haube (6) angeordnet ist, die Verriegelung dieser Anordnung auf besagtem Chassis (7) ermöglicht,
- besagte beide Haubenelemente (5, 6) im Fall des Öffnens der Haube (1) von hinten nach vorne wie eine Haube aus einem einzigen Stück miteinander einstückig ausgebildet sind,
- und dass das erste (5) der beiden Haubenelemente (5, 6) dafür eingerichtet ist:
* sich nur durch Schwenken von vorne nach hinten zu verschieben um besagte Aussparung (5a) freizugeben, während das zweite Haubenelement (6) in seiner Schließposition verbleibt,
* und einen Durchlass für das feste Dach (3) zu der Aussparung (5a) und ein Verstauen des gefalteten Dachs (3) in besagtem Kofferraum (4) zu ermöglichen.

2. Heckkofferraumhaube gemäß Anspruch 1, **dadurch gekennzeichnet, dass** das erste Haubenelement (5) auf dem zweiten Haubenelement (6) entlang einer nahe des hinteren Bereiches dieses zweiten Haubenelementes (6) angeordneten Achse (10) gelenkig angebracht und an diesem zweiten Haubenelement (6) durch einen nahe des vorderen Bereiches der beiden Haubenelemente (5, 6) angeordneten gleitenden Riegel (11) verriegelt ist.

3. Heckkofferraumhaube gemäß Anspruch 2, **dadurch gekennzeichnet, dass** das Schwenken des ersten Haubenelementes (5) entlang besagter, nahe des hinteren Bereiches des zweiten Haubenelementes (6) angeordneten Achse (10) von einem Motor (12) gesteuert wird, der einen gezahnten, einstückig mit dem zuvor genannten ersten Haubenelement (5) ausgebildeten Bereich (13) antreibt.

4. Heckkofferraumhaube gemäß Anspruch 3, **dadurch gekennzeichnet, dass** der Motor (12) auf dem zweiten Haubenelement (6) angebracht ist.

5. Heckkofferraumhaube gemäß Anspruch 2, **dadurch gekennzeichnet, dass** das Schwenken des ersten Haubenelementes (5) entlang besagter, nahe des hinteren Bereiches des zweiten Haubenelementes (6) angeordneten Achse (10) durch einen Stellantrieb (14) gesteuert oder für eine manuelle Handhabung des ersten Haubenelementes (5) ausbalanciert werden kann.

6. Heckkofferraumhaube gemäß Anspruch 5, **dadurch gekennzeichnet, dass** der Stellantrieb (14) auf dem zweiten Haubenelement (6) angebracht ist.

7. Heckkofferraumhaube gemäß einem der Ansprüche 1 bis 6, **dadurch gekennzeichnet, dass** die aus den beiden miteinander verriegelten Haubenelementen (5, 6) gebildete Anordnung während ihres Öffnens von hinten nach vorne durch einen einerseits an dem Chassis (7) und andererseits an besagtem zweiten Haubenelement (6) befestigten Stellantrieb (15) ausbalanciert wird.

8. Heckkofferraumhaube gemäß einem der Ansprüche 1 bis 7, **dadurch gekennzeichnet, dass** die beiden Haubenelemente (5, 6) miteinander durch einen Zapfen (11) verriegelt sind, welcher gleitend in einem Lager (16) angeordnet ist, das einstückig mit dem ersten Haubenelement (5) ausgebildet und in ein in dem zweiten Haubenelement (6) ausgebildetes Loch (17) eingeschoben ist, wobei dieser Zapfen (11) von einem Motor (18) oder einem manuellen Organ gesteuert wird.
